# EUROPEAN PATENT SPECIFICATION

(11) **EP 2 658 266 B1**
(45) Date of publication and mention of the grant of the patent: **27.05.2015**
(21) Application number: 12165350.5
(22) Date of filing: 24.04.2012
(51) Int. Cl.: G06T 11/60, H04N 13/00

(54) **Text aware virtual view rendering**
Textbewusste virtuelle Ansichtsdarstellung
Rendu de vues virtuelles sensible au texte

(43) Date of publication of application: 30.10.2013
(73) Proprietor: Vestel Elektronik Sanayi ve Ticaret A.S., 45030 Manisa (TR)
(72) Inventor: Cigla, Cevahir, 45030 Manisa (TR)
(74) Representative: Cayli, Hülya

(56) References cited:
- EP-A1- 2 403 254
- WO-A1-2010/151555
- US-A1- 2006 146 169
- "GIPM Plugin Registry - Warp Text", , 11 July 2010 (2010-07-11), XP55032931, Retrieved from the Internet: URL:http://registry.gimp.org/node/24568 [retrieved on 2012-07-17]

## Description

### Technical Field

The present invention is related to a device and a method for text aware virtual view rendering in stereo or multi-view video.

### Prior Art

In stereoscopic displays or multi-view displays, virtual view synthesis is a commonly used method for enhancing the 3D capabilities, such as depth adjustment, changing viewing angle for free view or extension of mono/ stereo videos to multiple-view, of the displays. In general, in order to generate said virtual view, depth base rendering is used. In depth base rendering, preferably depth map for scene is generated by using real images acquired from different view points and by using said depth map and texture of an original (reference) scene, a virtual view from an arbitrary view point is generated (rendered). During this process, texture of said scene is warped in accordance with dept map information (for example the pixels (or the voxels) closer to the location of the view point of the virtual view are considered to be visible). When all the texture from the reference view is warped; some missing locations (holes) occur due to occluded regions. These locations are filled by various methods such as in-painting, background copying or averaging over neighboring pixels (voxels). For the stereo case, the texture of the left and right views could also be blended to obtain the texture of the arbitrary view.

During the virtual view synthesis, depth map information may not be generated perfectly. In other words, said information may comprise errors. Due to said errors, generated virtual view may contain objects with improper depth. Although most of the users do not notice this depth error for background objects, said error for the texts (such as subtitle) in the view user degrade user comfort since texts are considered most salient objects in a display. Thus, during the virtual view rendering, texts should be rendered with least error.

Patent document WO2008115222A1 discloses a system and a method for combining text with 3D content. In this document, a text is inserted as the highest depth value in 3D content. Although in this document subtitles are inserted to 3D view with high visibility, background image and text portion of the images may mix each other because text regions are detected by putting boxes around the text and processing said box as a whole. As well as, depth detection is provided for the original image without subtitle which is an easier task compared to the images with built-in text.

Another patent document WO2010151555A1 discloses a method for embedding subtitles and/or graphic overlays in a 3D or multi-view video. However, this document fails to solve the problem of erroneously positioned characters in rendered image, which occurs because of erroneous depth map.

Patent document EP2403254A1 0discloses apparatus, program and method for image processing. According to this document, two images are received by a receiver. By using a caption detection module, texts of received images are determined. In this document, same parallax information is used for the captions.

### Brief Description of the Invention

Present invention discloses method and system for virtual view rendering, in which input video with text is rendered in accordance with depth data. Said method comprises the steps of; determining the format of the input video in terms of view number; detecting said text on said input video by performing a text detection algorithm in accordance with determined format of the input video; generating a rendered view by performing depth data post processing in which detected text is warped with constant depth distribution in accordance with said depth data.

Furthermore, said system comprises at least one means for determining the format of an input video in terms of view number; at least one means for detecting at least one text on said video in accordance with determined format; at least one means for depth data post processing, which warps detected text with a constant depth value.

With the virtual view rendering method and system of the present invention, a text of a video is extracted from the video. Then, said text and the background view of the video are warped independently according to the depth data of the video. Thus, according to the present invention character shift because of the erroneous depth data information is prevented and background of the video is warped without mixing the text.

### Object of the Invention

The object of the invention is to provide a method and a system for rendering virtual views comprising texts.

Another object of the present invention is to provide a method and a system for rendering texts in a virtual view with least error.

Another object of the present invention is to provide a method and a system for rendering virtual views with high reliability.

### Description of the Drawings

Figure 1 shows an erroneous virtual view rendering example of the prior art.
Figure 2 shows flowchart of the virtual view rendering method of the present invention.
Figure 3 shows a virtual view rendering example of the present invention.

The reference numbers as used in figures may possess the following meanings.

| | |
|---|---|
| Original view | (O) |
| Original text characters | (O1, O2) |
| Rendered view | (R) |
| Rendered text characters | (R1, R2) |
| Depth map data | (M) |
| Depth information of the characters | (M1, M2) |
| Depth of the characters | (D1, D2) |
| Characters with depth information | (OD1, OD2) |
| Input video | (101) |
| Detecting video type | (102) |
| Text detection | (103) |
| Render error analysis | (104) |
| Depth data post processing | (105) |
| Depth data | (106) |
| Rendered view | (107) |

### Detailed Description of the Invention

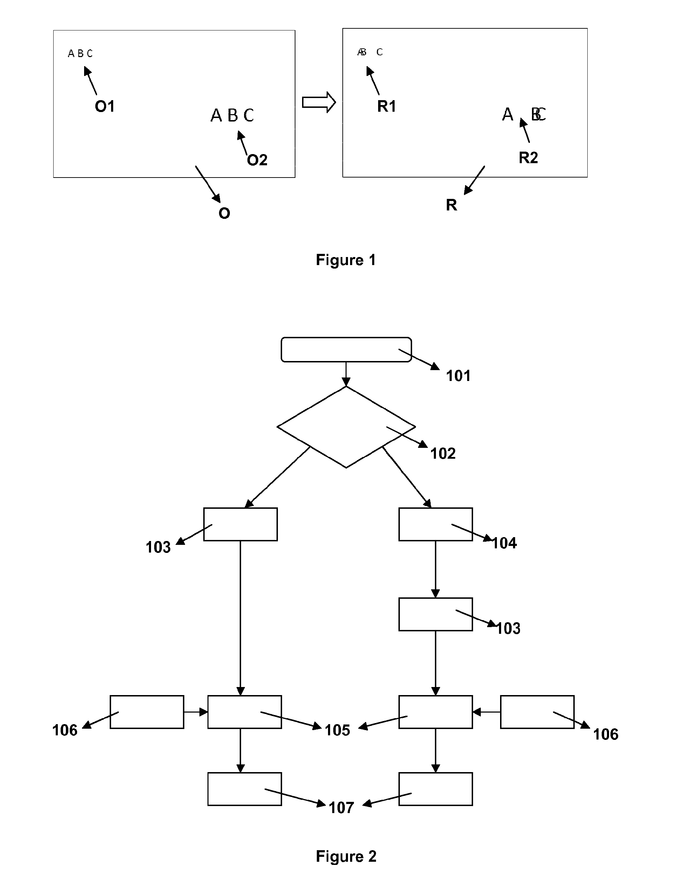

In stereoscopic displays or multi-view displays, virtual view synthesis is a commonly used method for enhancing the 3D capabilities of the displays. In the virtual view synthesis, generally, a texture data and depth map information for a display are generated and said information is used for generating (rendering) a virtual view from an arbitrary location. During the generation of said virtual view, said texture is warped in accordance with depth map information. If said depth map information comprises erroneous values, generated (rendered) image also comprises erroneous portions, which are also called artifacts. Normally, these artifacts are not noticed by users. However, if depth map of a text comprises errors, position of characters of said text may change erroneously. An exemplary erroneous rendered image is shown in figure 1. In this example, original view (O) involves text portions with original text characters (01, 02). When the texture of original view (O) is warped with erroneous depth map, rendered image (R) comprises rendered text characters (R1, R2), whose positions are shifted. Thus, in order to prevent such erroneously positioned characters in rendered image (R), present invention provides a method and a system for rendering texts in a virtual view without error.

In the virtual view rendering method of the present invention, whose flowchart is given in figure 2, first, format of an input video (101) is determined in terms of view number (such as mono, stereo or multiple view) (102). Then, in accordance with determined format, a text recognition algorithm is performed for detecting at least one text on said input video (101) (103). In the step of text detection (103), text regions are searched and text information (characters) of said text region is extracted. Finally, according to a depth data (106) information of the input video (101), a rendered view (107) is generated by depth data post processing (105). Said depth data can be acquired with the input video (101) as separate information or can be generated from the input video (101). In said data processing step (105), detected text is warped with constant depth distribution and independent from the background image of the video. According to the present invention, since detected text is processed independently from said background, even though depth map information comprises error, texts of the video are rendered with same depth value. Thus, shifting of the characters of an image is prevented.

Virtual view rendering system of the present invention comprises at least one means for determining the format of an input video (101) in terms of view number; at least one means for detecting at least one text on said video in accordance with determined format; at least one means for depth data post processing, which warps detected text with a constant depth value. In the system, text of said video is detected by said detection means and detected text is warped with depth data of the input video in depth data post processing means independent from the background view of the video.

In a preferred embodiment of the present invention, if detected video format of said input video (101) is a mono view, a detection algorithm to determine the locations of possible text regions is executed. Then, text information of said regions is extracted by using any of the text recognition algorithms known from the art (i.e. by using an OCR (optical character recognition) algorithm).

In another preferred embodiment of the present invention, if detected video format of said input video (101) is a stereo view or a multiple view, any detection algorithm for detecting the text for a stereo or a multiple view is performed. In this embodiment, before the step of text detection (103) preferably a render error analysis (104) step is performed. In the step of render error analysis (104), two frames from different views of stereo or multiple view video are compared to detect text. More specifically, a first frame of stereo or multiple view video is warped to other pair frame (which is a frame at the same instant with said first view but from another point view) through the depth data of the video. During this warping, visibility constraint of the warped frame is also utilized and the texture belonging to the closer pixels are over-written on the rendered view. In this way, the foreground objects can occlude background, which is an expected fact. Then, the synthesized view (warped first view) is compared with said pair frame. This comparison is done by taking the absolute frame difference of synthesized view and said pair frame. During the frame difference, holes in the synthesized view are not considered since they correspond to regions which cannot be viewed by point view of said pair frame. The large inconsistencies, between the synthesized view and said pair frame, with high absolute RGB differences correspond to the erroneous regions in the depth data. These inconsistent regions may involve text, repeated patterns, thin objects where most of the depth extraction methods may fail. In order to extract text from stated inconsistencies, the frame differences are compared to a threshold and the pixels having RGB errors larger than the threshold are assigned to be possible text regions. Then, possible text regions are searched for a text and a text detection algorithm is performed. By this way, text detection algorithm is performed for possible text regions instead of a whole frame. Thus, performance and reliability of the step of text detection (103) is enhanced.

In another preferred embodiment of the present invention, during the step of depth data post processing (105), detected text is warped with the depth data value of the text character, which is closest to the point of view. Thus, by this method all the characters of the detected text are viewed with same depth. Thus, not only the shift of the characters is prevented but also all the characters are seen uniformly.

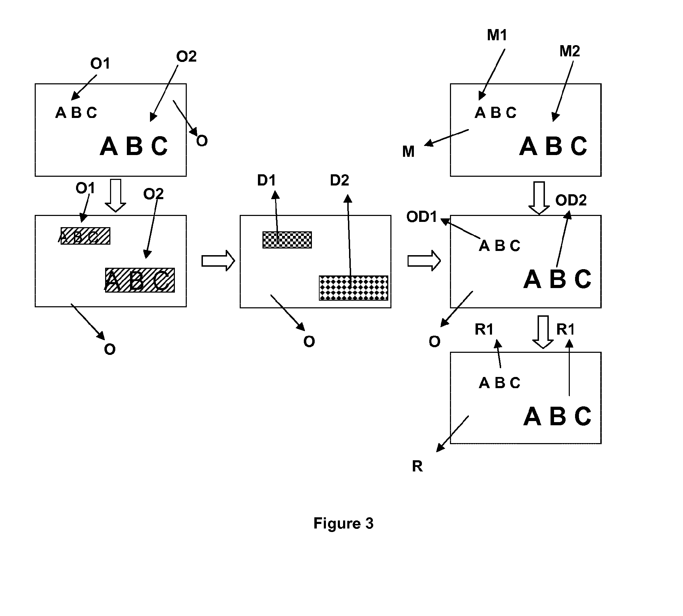

An embodiment of the present invention is given in figure 3. According to this embodiment, first, original text characters (01, 02) of an original view (O) are detected by identifying text regions (said text regions are shown with diagonal lines). Then, according to depth map data (M) for said original view (O), depth of the characters (D1, D2) on said text regions are determined. For each text region, all characters with depth information (OD1, OD2) are generated, so that all characters (OD1, OD2) in one text regions have the same depth. Finally, rendered image (R), with correct rendered characters (R1, R2) (characters without shift) is generated by warping the original image (O) with depth map data (M).

With the virtual view rendering method and system of the present invention, a text (such as subtitle, more specifically an embedded subtitle) of a video is extracted from the video. Then, said text and the background view of the video (without text) are warped independently according to the depth data of the video. Thus, according to the present invention character shift because of the erroneous depth data information is prevented and background of the video is warped without mixing the text.

## Claims

1. A virtual view rendering method, in which an input video (101), with at least one text, is rendered in accordance with a depth data (106) to render a virtual view, **characterized in that** said method comprises the steps of;
- determining a format of the input video (101) in terms of view number (102);
- detecting at least one text on said input video (101) (103) by performing a text detection algorithm in accordance with determined format of the input video (101); wherein
i. if detected video format of said input video (101) is a mono view, the step of text detection (103) comprises executing a detection algorithm to determine the locations of possible text regions,
ii. if detected video format of said input video (101) is a stereo view or a multiple view, a step of render error analysis (104) for detecting possible text regions is performed before the step of text detection (103) and the step of render error analysis comprises comparing two frames from different views of stereo or multiple view video to detect text and the step of text detection (103) comprises performing a detection algorithm for detecting the text of a stereo or a multiple view,
- generating a rendered view (107) by performing depth data post processing (105) in which for each text region, all characters of detected text are warped with same depth distribution in accordance with said depth data (106).

2. The method according to claim 1 **characterized in that**; the step of text detection (103) further comprises extracting text information of said regions by using a text recognition algorithm.

3. The method according to claim 1 **characterized in that**; the step of render error analysis (104) comprises the steps of;
- warping a first frame of said stereo or multiple view video to a pair frame through the depth data (106) of said input video (101);
- comparing warped frame with said pair frame by taking the absolute frame difference of synthesized view and said pair frame;
- comparing the absolute frame difference with a threshold value;
- for a pixel if absolute frame difference of the warped frame and said pair frame is greater than said threshold value, assigning said pixel as a possible text region;
- performing the step of text detection (103) for said possible text region.

4. The method according to claim 1 **characterized in that**; the step of depth data post processing (105) comprises warping said detected text with a depth data value of the text character, which is closest to a point of view.

5. A virtual view rendering system, in which an input video (101), with at least one text, is rendered in accordance with a depth data (106) to render a virtual view **characterized by** comprising;
- at least one means for determining the format of an input video (101) in terms of view number;
- at least one means for detecting at least one text on said video by performing a text detection algorithm in accordance with determined format of the input video;
wherein
i. if detected video format of said input video is a mono view, the step of text detection comprises executing a detection algorithm to determine the locations of possible text regions,
ii. if detected video format of said input video is a stereo view or a multiple view, a step of render error analysis for detecting possible text regions is performed before the step of text detection and the setp of render error analysis comprises comparing two framse from different views of stereo or multiple view video to detect text and
the step of text detection comprises performing a detection algorithm for detecting the text of a stereo or a multiple view
- at least one means for generating a rendered view by performing depth data post processing in which for each text region, all characters of detected text are warped with same depth distribution in accordance with said dept data.

## Patentansprüche

1. Rendering-Verfahren für eine virtuelle Ansicht, bei welchem Verfahren ein Eingangsvideo (101) mit zumindest einem Text gerendert wird (dargestellt oder wiedergegeben wird), entsprechend von Tiefendaten (106), um eine virtuelle Ansicht zu rendern,
**dadurch gekennzeichnet, dass** das Verfahren die folgenden Schritte aufweist;
- Bestimmen eines Formats des Eingangsvideos (101) in der Form oder im Sinne einer Bildanzahl (102);
- Erfassen zumindest eines Texts in dem Eingangsvideo (101,103) durch Ausführen einer Texterkennung (Text-Erkennungs-Algorithmus) entsprechend oder in Übereinstimmung mit dem bestimmten Format des Eingangsvideos (101); wobei
i. nach Erfassen eines Videoformats des Eingangsvideos (101) als Mono-Bild der Schritt der Texterkennung (103) das Ausführen eines Erkennungsalgorithmus zur Erfassung der Orte von möglichen Textregionen umfasst,
ii. nach Erfassen eines Videoformats des Eingangsvideos (101) als ein StereoBild oder ein mehrfaches Bild (multiple view), ein Schritt des Renderns einer Fehleranalyse (104) zum Erfassen möglicher Textregionen ausgeführt wird, vor (zeitlich vor) dem Schritt der Texterkennung (103), und der Schritt des Bereitstellens der Fehleranalyse das Vergleichen von zwei Frames aus unterschiedlichen Bildern (Views) eines Stereo- oder eines Mehrfachbild-Videos umfasst, zur Erfassung des Textes, und der Schritt der Texterkennung (103) das Ausführen eines Erfassungsalgorithmus zur Erkennung des Textes eines Stereo-Bildes oder eines Mehrfach-Bildes umfasst,
- Erzeugen einer gerenderten Ansicht oder Darstellung (107) durch Ausführen einer Tiefendaten-Nachbearbeitung (105), in welcher für jede Textregion alle Zeichen des erfassten Textes gewarped werden, und zwar mit derselben Tiefenverteilung in Übereinstimmung mit oder entsprechend den Tiefendaten (106).

2. Verfahren nach Anspruch 1, **dadurch gekennzeichnet, dass** der Schritt der Texterfassung (103) weiter das Extrahieren von Textinformationen aus den Regionen umfasst, durch Verwenden eines Texterkennungs-Algorithmus.

3. Verfahren nach Anspruch 1, **dadurch gekennzeichnet, dass** der Schritt des Renderns der Fehleranalyse (104) die folgenden Schritte aufweist;
- Warpen (sinngemäß Verformen oder Verwinden oder Krümmen) des ersten Frames des Stereo-Bildes oder des mehrfachen Bildes des Videos in ein FramePaar durch die Tiefendaten (106) des Eingangsvideos (101);
- Vergleichen des gewarpten Frames mit dem Paar-Frame durch Nehmen oder Verwenden des absoluten Frame-Unterschieds oder der absoluten FrameDifferenz eines synthetisierten Bildes und des Paar-Frames;
- Vergleichen der absoluten Frame-Differenz mit einem Schwellenwert;
- wenn für die absolute Frame-Differenz des gewarpten Frames und des FramePaars für ein Pixel oder bei einem Pixel größer als der Schwellenwert ist, Zuordnen des Pixels als eine mögliche Textregion;
- Ausführen des Schritts der Texterfassung oder Texterkennung (103) für die mögliche Textregion.

4. Verfahren nach Anspruch 1, **dadurch gekennzeichnet, dass** der Schritt der TiefendatenNachbearbeitung (105) das Warping (Verformen, Verwinden oder Krümmen) des erfassten Textes umfasst, mit einem Tiefendaten-Wert des Text-Characters (des Textzeichens), welches am nächsten zu einem Betrachtungspunkt liegt oder ist.

5. **System** zum Rendern einer virtuelle Ansicht, bei dem ein Eingangsvideo (101) mit zumindest einem Text renderbar ist (darstellbar oder wiedergegebbar), entsprechend oder in Übereinstimmung mit Tiefendaten (106), um eine virtuelle Ansicht zu rendern, **dadurch gekennzeichnet, dass** das System umfasst;
- zumindest eine Einrichtung zum Bestimmen des Formats des Eingangsvideos (101) in der Form oder im Sinne einer Bildanzahl;
- zumindest ein Mittel zur Erfassung zumindest eines Textes (eines Zeichens) auf dem Video durch Ausführen eines Texterkennungs-Algorithmus in Übereinstimmung mit einem vorbestimmten Format des Eingangsvideos; wobei
i. nach Erfassen eines Videoformats des Eingangsvideos (101) als Mono-Bild der Schritt der Texterkennung (103) das Ausführen eines Erkennungsalgorithmus zur Erfassung der Orte von möglichen Textregionen umfasst,
ii. nach Erfassen eines Videoformats des Eingangsvideos als ein Stereo-Bild oder ein mehrfaches Bild (multiple view), ein Schritt des Renderns einer Fehleranalyse zum Erfassen möglicher Textregionen ausführbar ist, vor dem Schritt der Texterkennung, und der Schritt des Bereitstellens der Fehleranalyse zwei Frames aus unterschiedlichen Bildern eines Stereooder eines mehrfachen Bild-Videos vergleicht, zur Erfassung des Textes, und der Schritt der Texterkennung das Ausführen eines Erfassungsalgorithmus zur Erkennung des Textes eines Stereo-Bildes oder eines mehrfachen Bildes umfasst,
- zumindest eine Einrichtung zum Erzeugen einer gerenderten Darstellung durch Ausführen einer Tiefendaten-Nachbearbeitung, in welcher für jede Textregion alle Zeichen des erfassten Textes gewarped werden, und zwar mit derselben Tiefenverteilung in Übereinstimmung mit den Tiefendaten.

## Revendications

1. Procédé de rendu de vues virtuelles, dans lequel une vidéo d'entrée (101), avec au moins un texte, est rendue conformément à des données de profondeur (106) de manière à rendre une vue virtuelle, **caractérisé en ce que** ledit procédé comprend les étapes suivantes :
- la détermination d'un format de la vidéo d'entrée (101) en termes de nombre de vues (102) ;
- la détection d'au moins un texte sur ladite vidéo d'entrée (101) (103) en réalisant un algorithme de détection de texte conformément à un format déterminé de la vidéo d'entrée (101) ; dans lequel
i. si le format vidéo détecté de ladite vidéo d'entrée (101) est une vue mono, l'étape de détection de texte (103) comprend l'exécution d'un algorithme de détection pour déterminer les positions de régions de texte possibles,
ii. si le format vidéo détecté de ladite vidéo d'entrée (101) est une vue stéréo ou une vue multiple, une étape d'analyse d'erreurs de rendu (104) pour détecter des régions de texte possibles est réalisée avant l'étape de détection de texte (103) et l'étape d'analyse d'erreurs de rendu comprend la comparaison de deux images provenant de différentes vues de vidéo à vues stéréo ou multiples pour détecter un texte et l'étape de détection de texte (103) comprend la réalisation d'un algorithme de détection pour détecter le texte d'une vue stéréo ou multiple,
- la génération d'une vue rendue (107) en réalisant un post-traitement de données de profondeur (105) dans lequel, pour chaque région de texte, tous les caractères du texte détecté sont déformés avec la même distribution de profondeur conformément auxdites données de profondeur (106).

2. Procédé selon la revendication 1, **caractérisé en ce que** l'étape de détection de texte (103) comprend en outre l'extraction d'informations de texte desdites régions en utilisant un algorithme de reconnaissance de texte.

3. Procédé selon la revendication 1, **caractérisé en ce que** l'étape d'analyse d'erreurs de rendu (104) comprend les étapes suivantes :
- la déformation d'une première image de ladite vidéo à vues stéréo ou multiples à une image paire à travers les données de profondeur (106) de ladite vidéo d'entrée (101);
- la comparaison de l'image déformée avec ladite image paire en prenant la différence absolue d'image de la vue synthétisée et de ladite image paire ;
- la comparaison de la différence absolue d'image avec une valeur de seuil ;
- pour un pixel, si la différence absolue d'image de l'image déformée et de ladite image paire est supérieure à ladite valeur de seuil, l'affectation dudit pixel comme une région de texte possible ;
- la réalisation de l'étape de détection de texte (103) pour ladite région de texte possible.

4. Procédé selon la revendication 1, **caractérisé en ce que** l'étape de post-traitement de données de profondeur (105) comprend la déformation dudit texte détecté avec une valeur de données de profondeur du caractère de texte qui est la plus proche d'un point de vue.

5. Système de rendu de vues virtuelles, dans lequel une vidéo d'entrée (101), avec au moins un texte, est rendue conformément à des données de profondeur (106) de manière à rendre une vue virtuelle, **caractérisé en ce qu'**il comprend :
- au moins un moyen pour déterminer le format d'une vidéo d'entrée (101) en termes de nombre de vues ;
- au moins un moyen pour détecter au moins un texte sur ladite vidéo en réalisant un algorithme de détection de texte conformément à un format déterminé de la vidéo d'entrée ;
dans lequel
i. si le format vidéo détecté de ladite vidéo d'entrée est une vue mono, l'étape de détection de texte comprend l'exécution d'un algorithme de détection pour déterminer les positions de régions de texte possibles,
ii. si le format vidéo détecté de ladite vidéo d'entrée est une vue stéréo ou une vue multiple, une étape d'analyse d'erreurs de rendu pour détecter des régions de texte possibles est réalisée avant l'étape de détection de texte et l'étape d'analyse d'erreurs de rendu comprend la comparaison de deux images provenant de différentes vues de vidéo à vues stéréo ou multiples pour détecter un texte et l'étape de détection de texte comprend la réalisation d'un algorithme de détection pour détecter le texte d'une vue stéréo ou multiple
- au moins un moyen pour générer une vue rendue en réalisant un post-traitement de données de profondeur dans lequel, pour chaque région de texte, tous les caractères du texte détecté sont déformés avec la même distribution de profondeur conformément auxdites données de profondeur.
